# EUROPÄISCHE PATENTSCHRIFT

(11) **EP 0 694 200 B1**
(45) Veröffentlichungstag und Bekanntmachung des Hinweises auf die Patenterteilung: **23.07.1997**
(21) Anmeldenummer: 92917614.7
(22) Anmeldetag: 21.08.1992
(51) Int. Cl.: H01B 7/34, H01R 4/68

(54) **TIEFTEMPERATUR-STROMZUFÜHRUNG MIT WÄRMETAUSCHER**
LOW-TEMPERATURE CURRENT SUPPLY WITH HEAT EXCHANGER
ALIMENTATION EN COURANT A BASSE TEMPERATURE AVEC ECHANGEUR DE CHALEUR

(30) Priorität: 22.08.1991 DE 4127711
(43) Veröffentlichungstag der Anmeldung: 31.01.1996
(73) Patentinhaber: Forschungszentrum Karlsruhe GmbH, 76133 Karlsruhe (DE)
(72) Erfinder: FRIESINGER, Günter, D-7514 Eggenstein-Leopoldshafen (DE); HELLER, Reinhard, D-6700 Ludwigshafen (DE); KATHEDER, Heinrich, D-7515 linkenheim-Hochstetten (DE); ZAHN, Gernot, D-7515 Linkenheim-Hochstetten (DE)
(74) Vertreter: Gottlob, Peter, Dipl. Ing.
(86) Internationale Anmeldenummer: DE9200700
(87) Internationale Veröffentlichungsnummer: WO9304487

(56) Entgegenhaltungen:
- US-A- 4 209 658
- US-A- 4 394 634

## Beschreibung

Die Erfindung betrifft eine Tieftemperatur-Stromzuführung mit Wärmetauscher, die ein kaltes Ende hat, an dem ein tiefgekühltes bzw. supraleitendes Bauteil angeschlossen ist, und deren anderes, warmes Ende an Kabel oder Stromschienen angeschlossen ist. Am kalten Ende reicht die Temperatur bis nahe an den absoluten Nullpunkt, wo hingegen am warmen Ende Zimmertemperatur herrscht.

Mit derartigen Stromzuführungen werden hohe bis sehr hohe elektrische Ströme an ein tiefgekühltes, supraleitfähiges Bauteil geleitet. In einer solchen Stromzuführung erfolgt der Übergang vom normal leitenden Material zum supraleitenden Material.

Der im normal leitenden Material fließende Strom erzeugt Joule'sche Wärme. Diese und die von der Raumtemperatur durch Wärmeleitung einfließende Wärme muß wirksam und zuverlässig abgeführt werden, damit die Supraleitung aufrecht erhalten werden kann. Oberflächen vergrößernde Maßnahmen und ein ausreichender Kühlmittel strom eines Kühlmittels mit guter Wärmeaufnahmefähigkeit sind Voraussetzung dazu.

Übliche Bauformen von Tieftemperatur-Stromzuführungen sind dergestalt, daß am kalten Ende der Supraleiter etwas in den Kontaktbereich der Stromzuführung hineinragt und mit ihm dort verbunden ist. Oberhalb des Kontaktbereichs sind dann um die Zuführung herum, also im eigentlichen Wärmetauscherbereich, oberflächevergrößernde Baumaßnahmen getroffen, von denen der Wärmeübergang auf das vorbeiströmende Kühlmittel erfolgt. Diese oberflächenvergrößernden Maßnahmen werden in üblichen Stromzuführungen z.B. durch Kapillaren, Drähte, Filamente, gewellte und gerollte Bleche oder Drahtgeflechte erreicht.

In der US 3,610,809 wird ein gasgekühlter poröser elektrischer Leiter bis 450A mit nicht konstantem Querschnitt vorgestellt. Die vorgesehene poröse elektrische Leiterform ist einerseits ein spiralig gewundenes Metallgitter oder ein ausgedehntes oder perforiertes Metallblech, an dem Kühlmittel zur Warmeaufnahme vorbeistromt.

Eine Stromdurchführung, die als Hin- und Rückleiter von einer Stromquelle in einer gekühlten Last eingesetzt wird, zeigt die US 3,654,377. Die Wärmetauscherregion an beiden Durchführungen besteht aus aneinandergereihten perforierten Scheiben, die in einer Flucht seitlich entlang des Leiters, gut wärmeleitend mit ihm verbunden, angebracht sind.

Bei all diesen Methoden erfolgt der elektrische Stromübergang von der Wärmetauscherregion in den Anschlußteil am warmen Ende in einem schlecht gekühlten Bereich, in welchem gleichzeitig durch den elektrischen Stromübergang erhebliche Joule'sche Wärme erzeugt wird.

Tieftemperatur-Stromzuführungen solcher Bauart werden in CRYOGENICS, APRIL 1975 auf der Seite 197 von Yu L. Buyanov et al. erwähnt (insbesondere dort Spalte 2, 4. Absatz).

Trotz der dort erzeugten Wärme wird das Kühlmittel mangels ausreichender Wärmetauscheroberfläche nicht bis auf Raumtemperatur aufgewärmt. Dies führt zu Kondensat- und Eisbildung und beeinträchtigt die elektrische Hochspannungsfestigkeit dort empfindlich.

Beträchtlicher Aufwand ist bei solchen Stromzuführungen zu treiben, um Eisbildung im Bereich des warmen Endes zu vermeiden. Zwei grundsätzliche Maßnahmen werden abwechselnd oder in Kombination angewandt. Das ist einmal das zusätzliche Anbringen von Heizeinrichtungen, die die Umgebung am warmen Ende ausreichend aufheizen. Zum anderen werden dort auch Kapselungen, die mit trockenem Gas geflutet sind, angebracht. Beide Maßnahmen, ob einzeln oder in Kombination, verlangen aus technisch physikalischen Gründen wegen der hohen Ströme und möglichen hohen elektrischen Spannungen einen erheblichen konstruktiven Aufwand.

Der Erfindung liegt die Aufgabe zugrunde, eine Tieftemperatur-Stromzuführung mit Wärmetauscher zu entwickeln, deren Wärmetauscherregion am warmen Ende bei hohen Strömen als auch im stromlosen Betrieb ein Vereisen der Stromzuführung bzw. Kühlmittel leitung vermeidet.

Diese Aufgabe wird erfindungsgemäß dadurch gelöst, daß sich der Wärmetauscherregion um das normal leitende Material zum warmen Ende hin eine weitere Wärmetauscherregion im Innern des Leitermaterials anschließt, die über den elektrischen Anschlußbereich hinausragt und in der Übergangszone zwischen diesen beiden Wärmetauscherregionen eine Durchtrittsmöglichkeit des Kühlmittels durch den dortigen Normalleiter ohne die den elektrischen Strom beeinträchtigende Querschnittsverkleinerung vorhanden ist.

Die Wärmetauscherregion im Innern des Leiters besteht ebenfalls aus aufeinandergestapelten, perforierten Scheiben, durch die das Kühlmittel strömt und sich weiter bis auf Raumtemperatur erwärmt. Gleichzeitig wird der Anschlußbereich und die Übergangsregion zwischen Anschlußbereich und Wärmetauscher gut gekühlt. Die Scheiben sind ebenfalls mit der Leiterwand gut thermisch kontaktiert.

Die mit der Erfindung erzielten Vorteile bestehen insbesondere darin, daß aufwendige Heizeinrichtungen und/oder Kapselungen am warmen Ende der Tieftemperaturstromzuführung vermieden werden können und dennoch die Erwärmung des Kühlmittels am warmen Ende bis auf Zimmertemperatur erfolgen kann.

Ein Ausführungsbeispiel ist in der Zeichnung dargestellt und wird im folgenden näher beschrieben. Es zeigen:
Figur 1a Tieftemperatur-Stromzuführung mit Wärmetauscher, Figur 1b kreisförmige, perforierte Kühlscheibe, Figur 1c ringförmige, perforierte Kühlscheibe
Figur 2a Temperaturverteilung ohne Wärmetauscher am warmen Ende bei stromlosem Betrieb, Figur 2b Temperaturverteilung mit Wärmetauscher am warmen Ende ebenfalls bei stromlosem Betrieb.
Figur 3a Temperaturverteilung ohne Wärmetauscher am warmen Ende bei 50 kA und Figur 3b Temperaturverteilung mit Wärmetauscher am warmen Ende ebenfalls bei 50 kA.

Die in Figur la schematisch dargestellte Tieftemperatur-Stromzuführung für hohe Störme besteht aus dem eigentlichen Leiter, einer Wärmetauscherregion 3 am kalten Ende, einer Wärmetauscherregion 4 im mittleren Bereich, einer Übergangsregion 5 und einer Wärmetauscherregion 6 am warmen Ende. Der Leiter 2 ist zylinderförmig und in seinem Querschnitt für den zu leitenden Strom dimensioniert. Im Bereich des kalten Endes kontaktiert der Supraleiter mit dem Leiter 2. Der Übergangswiderstand zwischen beiden muß äußerst gering sein. Der zylinderförmige Leiter 2 geht dann weiter in den mittleren Bereich und besteht dort nur noch aus normal leitendem Material, z.B. Kupfer.

Im Bereich des kalten Ende und in mittleren Bereich befinden sich die beiden Wärmetauscherregionen 3, 4 um den Leiter 2. Der Wärmetausch erfolgt über ringförmige, perforierte Scheiben 9, die die Leiteroberfläche 8 gut thermisch kontaktieren. Sie sind z.B. angelötet. Die Scheiben 9 selber bestehen aus einem Material, das die Wärme sehr gut leitet, z.B. auch Kupfer, oder entsprechendes. Die Scheiben 9 sind in vorgegebenem Abstand vom Beginn des kalten Endes bis zur Übergangsregion um den Leiter gestapelt und von einem konzentrischen Rohr 12 umgeben, so daß das Kühlmittel an der Leiteroberfläche 8 vorbei durch die Perforationen 10 vom kalten Ende her zum mittleren Wärmetauscher 4 hin strömen strömen muß und Wärme gut aufnehmen kann. Für Tieftemperatur-Stromzuführungen wird üblicherweise Helium als Kühlmittel verwendet. Je nach Sprungtemperaturniveau kann auch Stickstoff oder Wasserstoff eingesetzt werden.

In der übergangsregion 5 vergrößert sich der äußere Durchmesser des Leiters 2 und bleibt ab da hohlzylinderförmig bis zum warmen Ende 17, wobei die Wandstärke sich nach dem zu führenden Strom richtet.

Durch die Wand in der übergangsregion führen auf die Leiterachse gerichtete Bohrungen 15, die am Boden des Hohlzylinders durch die innere Hohlzylinderwand dringen. Der Leiterquerschnitt des Hohlzylinders 14 und des Übergangsbereichs 5 wird so gewählt, das die Leiterquerschnittsreduktion durch die Bohrungen 15 für den Kühlmitteldurchfluß kompensiert wird und die Stromdichte dort sich nicht ungewünscht erhöht.

Im Hohlzylinder 14 von der Übergangsregion 5 bis zum warmen Ende 17 sind kreisförmige Scheiben 19 in vorgegebenem Abstand zueinander gestapelt und an ihrem Rand mit der Hohlzylinderinnenwand gut thermisch kontaktiert bzw. dort verlötet. Die Scheiben 19 sind ebenfalls perforiert und beispielsweise aus demselben Material wie die ringförmigen Scheiben 9 der beiden anderen Wärmetauscherregionen 3, 4.

Das Kühlmittel strömt nun durch die Bohrungen 15 weiter in die innere Wärmetauscherregion 6 und nimmt Wärme auf. Insbesondere im Bereich der Anschlußzone 7, da die Wärmetauscherregion 6 über den Stromanschluß 7 hinausragt und so gerade dort zu einer sicheren und definierten Kühlung führt.

Die Stromzuführung 1 zeigt einen stetigen Temperaturanstieg von der Sprungtemperatur etwas oberhalb des kalten Endes 18 beginnend bis zur Zimmer- oder Umgebungstemperatur am warmen Ende endend. Der Leiter 2 und das Kühlmittel weisen dabei gleiche bzw. nahe beieinanderliegende Temperaturen auf. Lediglich im Bereich der Übergangsregion 5 auf dem Weg durch die Bohrungen 15 nimmt das Kühlmittel aufgrund der verhältnismäßig kleinen Oberfläche dort kaum oder nunmehr wenig Wärme auf. Wo hingegen dort durch Stromfluß nach wie vor Wärme erzeugt wird.

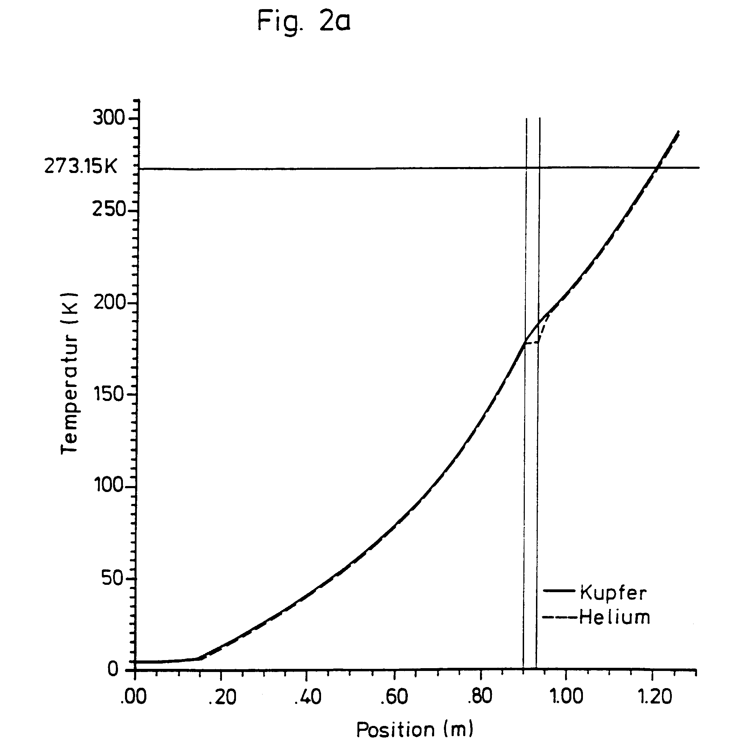

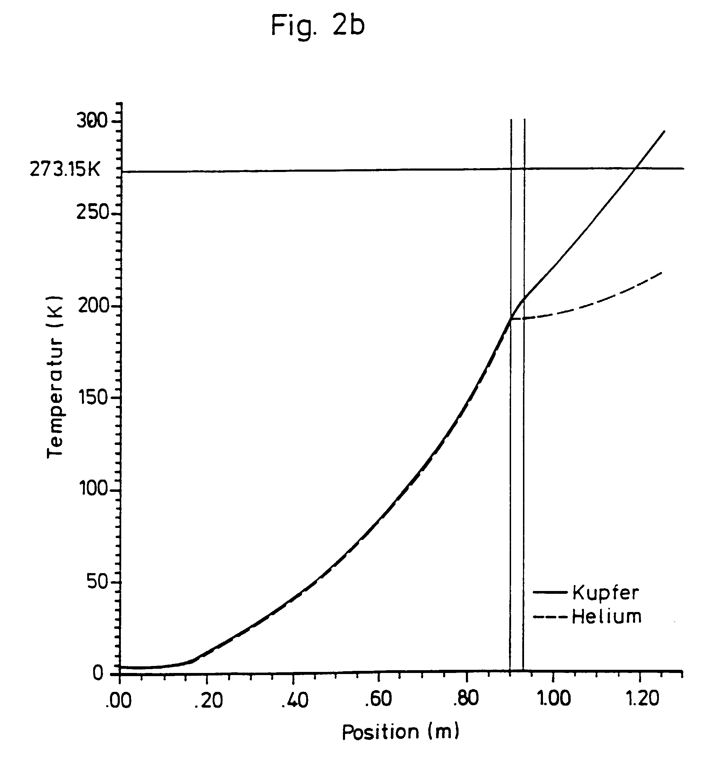

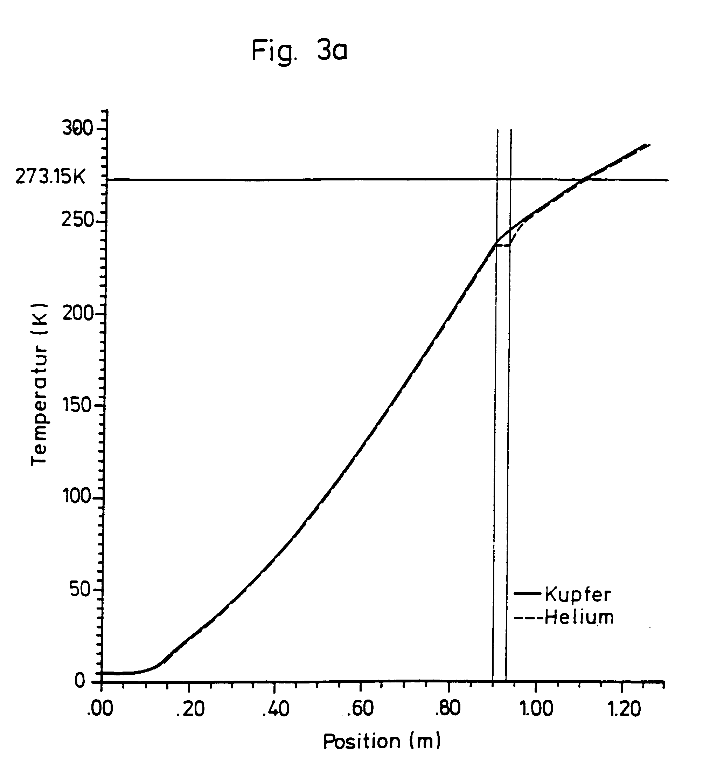

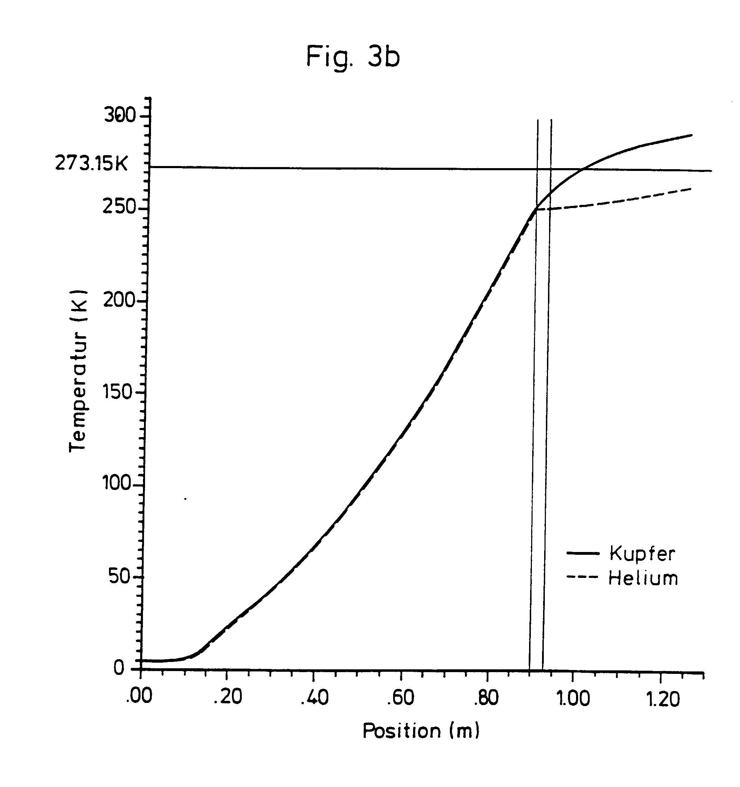

Die Angleichung der Kühlmitteltemperatur, z.B. Helium, an die Leitertemperatur, z.B. Kupfer, erfolgt jedoch rasch wieder auf dem anschließenden Strömungsweg durch den inneren Wärmetauscher 6. Die beiden Temperaturverläufe sind in Figur 2a für den stromlosen Betrieb und in Figur 3a für 50 kA, dargestellt und demonstrieren den Vorteil der inneren Wärmetauscherregion 6. Ohne den Wärmetauscher 6 im Bereich des warmen Endes 17 klaffen dort die beiden Temperaturverläufe ab der übergangsregion 5 bis zum warmen Ende 17 hin immer stärker auseinander, wie das Figur 2b für den stromlosen Betrieb und Figur 3b für 50 kA zeigt. Da das Kühlmittel außerhalb des warmen Endes 17 durch Rohre bzw. flexible dünnwandige Bauteile abgeführt wird, unterschreiten die Wandtemperaturen sehr schnell den Tau- bzw. Gefrierpunkt, so daß die Luftfeuchtigkeit kondensiert und sich Eis bildet.

Durch den inneren Wärmetauscher 6 wird die Vereisung der Tieftemperatur-Stromzuführung 1 am warmen Ende vermieden. Durch das Kühlmittel, welches im vorliegenden Fall bereits auf Raumtemperatur aufgewärmt in die Anschlußrohre eintritt, bleiben auch die Wandungen dieser Rohre auf Raumtemperatur oder zumindest über der Taupunktstemperatur, so daß sich kein Kondensat und kein Eis aus der Luftfeuchte niederschlagen kann, und selbst die elektrischen Verbindungen zum Anschlußbereich eisfrei bleiben. Dadurch entfallen komplizierte Kapselungen und aufwendige Zusatzheizeinrichtungen in diesem Bereich. Konstruktiv kann damit die Stromzuführung dort auf das Notwendige hinsichtlich Stromführung, Spannungsisolation und Wärmeisolation beschränkt werden.

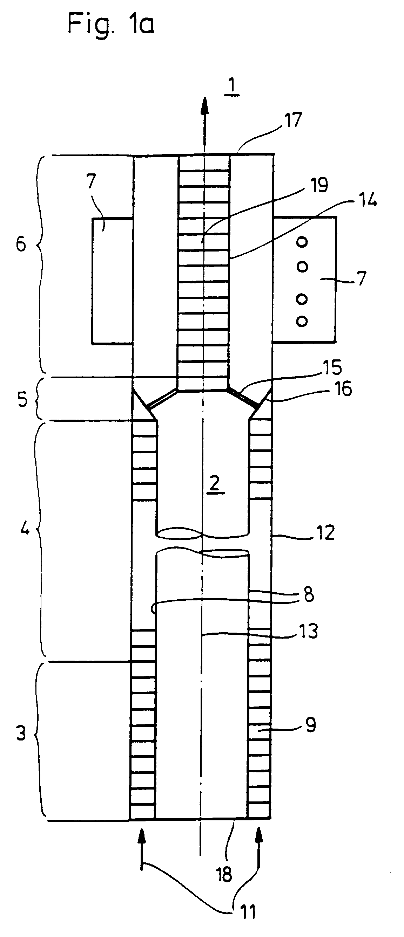

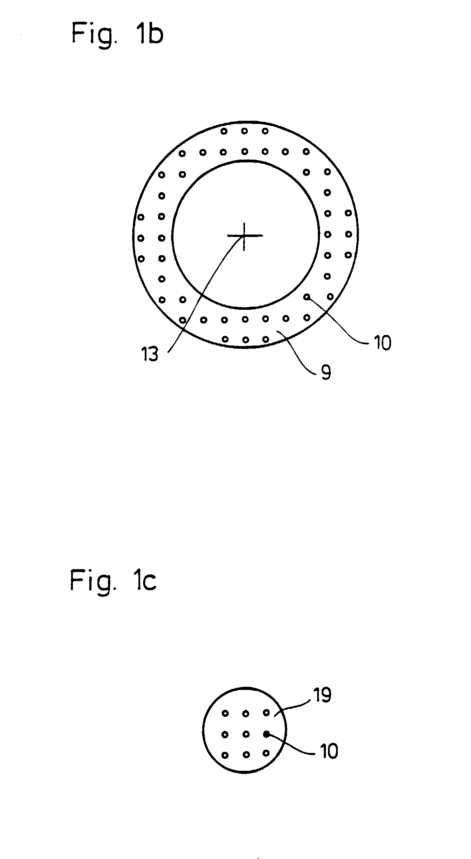

Die Ausführung der Wärmetauscherregionen 3, 4, 6 ist nicht auf die perforierten Scheiben und auf die Hohlzylinderform beschränkt. Der Einsatz der mit der Leiteroberfläche verlöteten, perforierten Scheiben (Figur 1b, c) hat sich nur als vorteilhaft und leicht durchführbar erwiesen. Andere oberflächenvergrößemde Maßnahmen, wie z.B. weiter oben schon erwähnt, kommen falls zweckmäßig, genauso in Betracht.

Der vorgeschlagene Wärmetauscher 6 am warmen Ende vermeidet, wie Figur 2a und 3a zeigt, auch im stromlosen Betrieb und bei hohem Strom ein Vereisen durch Luftkondensation am warmen Ende. Bis auf den Übergangsbereich 5 bleiben Kühlmitteltemperatur und Stromleitertemperatur gleich. Insgesamt ist der gemeinsame Temperaturverlauf weniger steil als in Figur 2b für den stromlosen Betrieb und in Figur 3b für den Strombetrieb. Dies hat den Vorteil, das der Kühlmittelstrom sogar noch etwas reduziert werden kann. Das ist für die Auslegung der Kühleinrichtung von besonders großen supraleitenden Anlagen von Bedeutung.

### Bezugszeichenliste

- 1: Stromzuführung
- 2: Leiter, Stab
- 3: Wärmetauscherregion, Wärmetauscher
- 4: Wärmetauscher, Wärmetauscher
- 5: Übergangsregion
- 6: Wärmetauscherregion, Wärmetauscher
- 7: Stromanschluß, Anschlußzone
- 8: Leiteroberfläche
- 9: Scheiben
- 10: Perforation
- 11: Kühlmittel
- 12: Rohr
- 13: Leiterachse
- 14: Hohlzylinder, Rohrstück
- 15: Bohrung
- 16: Kegelstumpf
- 17: warmes Ende
- 18: kaltes Ende
- 19: Scheiben
- 20: Temperaturanstieg

## Patentansprüche

1. Tieftemperatur-Stromzuführung mit Wärmetauscher bestehend aus:
a) einem kalten Ende (18), von dem der Strom zu einem tiefgekühlten bzw. supraleitenden Bauteil fließt, und einem warmen Ende (17), an dem Kabel oder Stromschienen angeschlossen sind,
b) einer ersten, vom kalten Ende (18) in Richtung warmes Ende reichenden Wärmetauscherregion (6), bei der der stromführende Stab (2) aus normal leitendem, und supraleitenden Material besteht, um den koaxial in vorgegebenem axialen Abstand perforierte ringförmige, metallische Scheiben (9)
gestapelt sind, die den Stab (2) gut thermisch kontaktieren, c) einer zweiten sich unmittelbar an die ersten anschließenden Wärmetauscherregion (3), bei der der im Querschnitt gleichbleibende stromführende Stab (2) nur noch aus normal leitendem Metall besteht, entlang dem wie oben weiterhin die selben Scheiben (9) in der selben Art gestapelt sind,
dadurch gekennzeichnet, daß
d) die Wärmetauscherregion (6) über den normal leitenden Stromanschluß (7) am warmen Ende hinausführt, der stromführende Stab (2) sich im Anschluß an die zweite Wärmetauscherregion (4) über eine vorgegebene axiale Länge weitet und sich dann stufenlos bis zum warmen Ende (17) ein stromführendes Rohrstück (14) aus dem bisher verwendeten, normal leitenden Material mit vorgegebener Wandstärke anschließt;
e) der Kühlmittelstrom im Bereich (5) von der äußeren Wärmetauscherregion (4) zur innenliegenden Wärmetauscherregion (6) geführt wird,
f) im Hohlzylinder (14) koaxial im vorgegebenen axialen Abstand perforierte Scheiben (19) bis zum warmen Ende (17) gestapelt sind, die die Hohlzylinderinnenwand gut thermisch kontaktieren und eine dritte Wärmetauscherregion (6) bilden, mit der die Aufwärmung vollends auf Zimmertemperatur (22) ohne Kondensat- oder Eisbildung an der Außenwand durch Luftfeuchtigkeit möglich ist.
g) der elektrische Stromanschluß (7) an der Außenseite im Bereich der Wärmetauscherregion (6) erfolgt, so daß die Wärmetauscherregion (6) über den Stromanschluß hinausragt, wodurch eine gute Kühlung dieser Region gewährleistet ist und gleichzeitig eine Erwärmung des Kühlmittels auf Zimmertemperatur erfolgt.

2. Wärmetauscher nach Anspruch 1, dadurch gekennzeichnet, daß die ringförmigen perforierten metallischen Scheiben (9) der ersten und zweiten Wärmetauscherregion (3, 4) und die Scheiben (19) in der dritten Wärmetauscherregion (6) aus einem die Wärme gut leitenden Material sind.

3. Wärmetauscher nach Anspruch 2, dadurch gekennzeichnet, daß die Scheiben (9, 19) über eine Löt- oder Schweißverbindung unmittelbar mit der Wand der jeweiligen Wärmetauscherregion verbunden sind, um einen guten Wärmeübergang zu gewährleisten.

4. Wärmetauscher nach Anspruch 3, dadurch gekennzeichnet, das der stromführende Hohlzylinder (14) des oberen Wärmetauschers (6) die stromführende Übergangsregion (5) und der stromführende Stab (2) des Wärmetauschers (4) aus ein und demselben Material unterbrechnungsfrei ineinander übergehen.

## Claims

1. Low-temperature current supply with heat exchanger, comprising:
a) a cold end (18), from which the current flows to a chilled or superconductive component, and a hot end (17) which communicates with cables or bus-bars,
b) a first heat exchanger region (6), which extends from the cold end (18) towards the hot end, and in which a current-carrying rod (2) is formed from normally conductive and superconductive material, around which rod perforated, annular, metallic discs (9) are stacked coaxially with a prescribed axial spacing therebetween and having a good thermal contact with the rod (2),
c) a second heat exchanger region (3), which communicates directly with the first region, and in which the current-carrying rod (2), having a uniform cross-section, is still formed only from normally conductive metal, along which rod the same discs (9) are also stacked in the same manner as described above,
characterised in that
d) the heat exchanger region (6) extends beyond the normally conductive current connection (7) at the hot end, the current-carrying rod (2) widens in conjunction with the second heat exchanger region (4) over a prescribed axial length, and then a current-carrying cylinder (14), which is formed from the hitherto used, normally conductive material with a prescribed wall thickness, extends steplessly to the hot end (17),
e) the flow of coolant is guided in the area (5) from the outer heat exchanger region (4) to the inner heat exchanger region (6),
f) perforated discs (19) are stacked in the hollow cylinder (14) coaxially with a prescribed axial spacing therebetween as far as the hot end (17), said discs having a good thermal contact with the inner wall of the hollow cylinder and forming a third heat exchanger region (6), with which the heating-up completely to ambient temperature (22) is possible without condensate or ice forming on the outer wall as a result of air humidity,
g) the electrical current connection (7) is effected on the outside in the area of the heat exchanger region (6), so that the heat exchanger region (6) protrudes beyond the current connection, whereby a good cooling of this region is ensured, and the coolant is simultaneously heated to ambient temperature.

2. Heat exchanger according to claim 1, characterised in that the annular, perforated, metallic discs (9) of the first and second heat exchanger regions (3, 4) and the discs (19) in the third heat exchanger region (6) are formed from a good heat-conducting material.

3. Heat exchanger according to claim 2, characterised in that the discs (9, 19) are directly connected to the wall of the respective heat exchanger region, via a soldered or welded joint, in order to ensure a good transfer of heat.

4. Heat exchanger according to claim 3, characterised in that the current-carrying hollow cylinder (14) of the upper heat exchanger (6), the current-carrying transitional region (5) and the current-carrying rod (2) of the heat exchanger (4), which are formed from one and the same material, extend into one another without any interruption.

## Revendications

1. Alimentation en courant à basse température avec échangeur de chaleur se composant :
a) d'une extrémité froide (18), à partir de laquelle circule le courant vers un élément de construction profondément refroidi ou supraconducteur, et une extrémité chaude (17) à laquelle sont raccordés des câbles ou barres conductrices,
b) d'une première région d'échangeur de chaleur (6) allant de l'extrémité froide (18) en direction de l'extrémité chaude, dans laquelle la barre (2) conduisant le courant se compose d'un matériau normalement conducteur, et d'un matériau supraconducteur, autour de laquelle sont empilés coaxialement en écartement axial prédéfini des disques métalliques (9) annulaires perforés qui créent un contact thermiquement bon avec la barre (2),
c) d'une deuxième région d'échangeur de chaleur (3) se raccordant à la première directement, dans laquelle la barre (2) conduisant le courant conserve la même section transversale, est composée seulement d'un métal normalement conducteur, le long de laquelle comme en outre plus haut les mêmes disques sont empilés de la même façon,
caractérisée en ce que
d) la région d'échangeur de chaleur (6) se prolonge vers l'extrémité chaude au-delà du raccordement de courant (7) normalement conducteur, la barre (2) conductrice du courant s'évase au raccordement avec la deuxième région d'échangeur de chaleur (4) sur une longueur axiale prédéfinie et un morceau de tube (14) conducteur du courant composé d'un matériau normal conducteur, utilisé jusqu'à présent se raccorde sans discontinuité à l'extrémité chaude (17) avec une épaisseur de paroi prédéfinie,
e) le flux d'agent refroidisseur dans la zone (5) est guidé de la région d'échangeur de chaleur extérieure (4) à la région d'échangeur de chaleur intérieure (6),
f) dans le cylindre creux (14) sont empilés coaxialement avec un écartement axial prédéfini jusqu'à l'extrémité chaude (17), des disques (19) qui créent un bon contact thermique avec la paroi interne du cylindre creux et forment une troisième région d'échangeur de chaleur (6), avec laquelle le réchauffage à la température ambiante (22) est tout à fait possible sans formation de condensât ou de glace sur la paroi extérieure par suite de l'humidité de l'air,
g) le raccordement de courant électrique (7) a lieu sur la zone extérieure de la région d'échangeur de chaleur (6), de sorte que la région d'échangeur de chaleur (6) dépasse au-delà du raccordement de courant, raison pour laquelle un bon refroidissement de cette région est garanti et en même temps a lieu un échauffement de l'agent réfrigérant à la température ambiante.

2. Echangeur de chaleur selon la revendication 1,
caractérisé en ce que
les disques annulaires métalliques perforés (9) de la première et de la deuxième région d'échangeur de chaleur (3, 4) et les disques (19) de la troisième région d'échangeur de chaleur (6) sont en un matériau bon conducteur de la chaleur.

3. Echangeur de chaleur selon la revendication 2,
caractérisé en ce que
les disques (9, 19) sont reliés par une connexion de brasage ou de soudure directement à la paroi de la région d'échangeur de chaleur correspondante, pour assurer un bon passage de la chaleur.

4. Echangeur de chaleur selon la revendication 3,
caractérisé en ce que
le cylindre creux conducteur du courant (14) de l'échangeur de chaleur supérieur (6), la région de transition conductrice du courant (5) et la barre conductrice de courant (2) de l'échangeur de chaleur (4) se convertissent l'une dans l'autre en un et même matériau sans interruption.
